# EUROPÄISCHE PATENTSCHRIFT

(11) **EP 0 839 264 B1**
(45) Veröffentlichungstag und Bekanntmachung des Hinweises auf die Patenterteilung: **01.12.1999**
(21) Anmeldenummer: 95930394.2
(22) Anmeldetag: 12.09.1995
(51) Int. Cl.: F01N 3/20, F23J 15/00

(54) **VERFAHREN UND EINRICHTUNG ZUM EINBRINGEN VON FLÜSSIGKEIT IN EINE ABGASREINIGUNGSVORRICHTUNG**
PROCESS AND DEVICE FOR INTRODUCING A FLUID INTO AN EXHAUST GAS PURIFICATION SYSTEM
PROCEDE ET SYSTEME PERMETTANT D'INTRODUIRE UN FLUIDE DANS UNE DISPOSITIF D'EPURATION DE GAZ D'ECHAPPEMENT

(30) Priorität: 13.09.1994 DE 4432577; 13.09.1994 DE 4432576
(43) Veröffentlichungstag der Anmeldung: 06.05.1998
(73) Patentinhaber: SIEMENS AKTIENGESELLSCHAFT, 80333 München (DE)
(72) Erfinder: HOFMANN, Lothar, D-96224 Burgkunstadt (DE); NEUFERT, Ronald, D-96247 Michelau (DE); MATHES, Wieland, D-96247 Michelau (DE)
(86) Internationale Anmeldenummer: DE9501248
(87) Internationale Veröffentlichungsnummer: WO9608639

(56) Entgegenhaltungen:
- EP-A- 0 487 886
- DE-C- 3 821 832
- PATENT ABSTRACTS OF JAPAN vol. 16 no. 545 (M-1337) ,16.November 1992 & JP,A,04 203346 (HITACHI LTD) 23.Juli 1992,

## Beschreibung

Die Erfindung bezieht sich auf ein Verfahren zum Betrieb einer Abgasreinigungseinrichtung im Auslaß einer Verbrennungsanlage, insbesondere im Auslaß eines Verbrennungsmotors eines Fahrzeugs, mit den im Oberbegriff der Ansprüche 1 und 3 angegebenen Merkmalen (EP-A-0 577 853). Weiter betrifft die Erfindung eine Einrichtung zum Einbringen einer Flüssigkeit in eine Abgasreinigungseinrichtung mit den im Oberbegriff der Ansprüche 5 und 14 genannten Merkmalen.

Die Erfindung ist auch für Heizungen und andere stationäre Verbrennungsanlagen geeignet, sofern diese zur Reinigung des Abgases vorsehen, daß eine Flüssigkeit (wie z. B. Harnstofflösung) in das Abgas eingedüst, vernebelt oder auf andere Weise eingegeben wird, wie dies z. B. bei der katalytischen Reinigung mancher industrieller Abgase vorgesehen ist. Dabei kann das Einbringen der Flüssigkeit ein Problem darstellen, wenn die Temperatur nach einer längeren Betriebspause soweit abgesunken ist, daß die Flüssigkeit eine zu hohe Viskosität besitzt oder ganz eingefroren ist. Die Erfindung ist aber vor allem für Verbrennungsmotoren in Fahrzeugen bestimmt.

Zur Verminderung der im Abgas eines Verbrennungsmotors enthaltenen Schadstoffe, im besonderen der Stickoxide, hat sich das Prinzip des geregelten oder gesteuerten Dieselkatalysators (GDK) als vorteilhafte Technik erwiesen. Diese Technik wird vor allem bei Verbrennungsmotoren, die mit Luftüberschuß betrieben werden, wie z. B. Diesel- und Magermotoren, eingesetzt. Diese im wesentlichen auf dem Verfahren der selektiven katalytischen Reduktion (SCR) beruhende Technik ist mittlerweile aus zahlreichen Veröffentlichungen und Patentanmeldungen, z. B. aus den deutschen Patentanmeldungen P 43 09 891.6, P 43 10 926.8 und P 43 15 278.3, bekannt. Beim SCR-Verfahren werden die Stickoxide zusammen mit Ammoniak an einem selektiven Katalysator kontaktiert und katalytisch zu umweltunbedenklichem Stickstoff und zu Wasser umgesetzt.

Aufgrund der mit dem Ammoniakeinsatz verbundenen Gefahr, nämlich der Giftigkeit, und aufgrund der durch Ammoniak hervorgerufenen Geruchsbelästigung soll Ammoniak bei einem mit GDK-System ausgestatteten Verbrennungsmotor nicht im Fahrzeug mitgeführt werden. Anstelle des Ammoniaks wird zur katalytischen Umsetzung der Stickoxide als Reduktionsmittel eine wäßrige Harnstofflösung im Fahrzeug mitgeführt. Aus dieser wäßrigen Harnstofflösung wird der Ammoniak durch Hydrolyse jeweils in der augenblicklich gerade zur Umsetzung der Stickoxide benötigten Menge erzeugt.

Es ist ein Vorteil der in wäßrigen Lösungen vorliegenden ammoniakfreisetzenden Substanzen, wie z. B. Harnstoff, daß die Bevorratung, die Handhabung, die Förder- und Dosierbarkeit technisch besonders einfach zu lösen sind. Ein gravierender Nachteil dieser wäßrigen Lösungen besteht darin, daß in Abhängigkeit von der Konzentration der gelösten Substanz die Gefahr des Einfrierens bei bestimmten Temperaturen besteht.

Die einfache Zugabe eines Frostschutzmittels scheitert daran, daß für solche wäßrigen Lösungen kein Frostschutzmittel bekannt ist, das bei wirtschaftlicher Dosierung eine nennenswerte Absenkung des Gefrierpunktes bewirkt. Zudem besteht bei Verwendung eines zusätzlichen Stoffes, wie hier eines Frostschutzmittels, im allgemeinen die Gefahr, daß im Zusammenhang mit der Anwendung eines Reduktionsmittels in der Abgasreinigungsanlage unerwünschte Nebenprodukte entstehen, die zusammen mit dem Abgas emittiert werden. Aus diesem Grunde können Frostschutzmittel in einem solchen Verfahren zur Abgasreinigung nicht eingesetzt werden.

Eine weitere Möglichkeit zur Vermeidung des Einfrierens der wäßrigen Lösung und zur Vermeidung von Frostschäden ist grundsätzlich die Beheizung der reduktionsmittelführenden Teile der Abgasreinigungsanlage. Bei mobilen Anwendungen, speziell in Nutzfahrzeugen (LKW), Lokomotiven und Schiffen - soweit diese nicht mit eigener Energieversorgung versehen sind -, steht jedoch die dazu notwendige elektrische Energie, insbesondere während längerer Stillstandszeiten, nicht zur Verfügung. So müßte beispielsweise bei einem LKW ein Volumen von etwa 100 l wäßriger Harnstofflösung vor dem Einfrieren geschützt werden.

Der Erfindung liegt daher die Aufgabe zugrunde, ein Verfahren und eine Einrichtung der eingangs genannten Art derart weiterzubilden, daß Frostschäden an einer Abgasreinigungsanlage, bei der eine Flüssigkeit in das Abgas eingedüst wird, während der Stillstandszeiten vermieden werden. Dadurch soll der Betrieb einer solchen Anlage auch bei Temperaturen unterhalb des Gefrierpunktes der verwendeten Flüssigkeit möglich sein.

Diese Aufgabe wird nach einer ersten Ausführungsform des Verfahrens erfindungsgemäß dadurch gelöst, daß bei einer Verbrennungsanlage, bei der die Flüssigkeit über eine Zuführungsleitung einem Vorratsbehälter entnommen und während der Verbrennung dem Abgas zur chemischen Abgasreinigung zugeführt wird, bei Stillsetzung der Verbrennungsanlage zumindest ein Teilstück der Zuführungsleitung mittels eines Druckgases entleert wird.

Die Zuführungsleitung kann daher nicht einfrieren und dabei beschädigt werden. Sie steht für einen erneuten Start auch bei tiefen Temperaturen zur Verfügung. Bevorzugt wird dabei ein Ventil benutzt, das zwischen dem Vorratsbehälter und dem Auslaß der Verbrennungsanlage in die Zuführungsleitung mündet. So ist es auf einfache Weise möglich, mit dem Druckgas einerseits den zwischen der Mündung und dem Vorratsbehälter liegenden Teil der Zuführungsleitung in den Vorratsbehälter und mit dem Druckgas andererseits auch den zwischen der Mündung und dem Auslaß liegenden Teil der Zuführungsleitung in den Auslaß zu entleeren.

Eine entsprechende Einrichtung zum Einbringen der Flüssigkeit in das durch die Abgasreinigungseinrichtung strömende Abgas der Verbrennungsanlage enthält einen Vorratsbehälter für die Flüssigkeit und eine daran angeschlossene Zuführungsleitung zur Abgasreinigungseinrichtung. Zur Lösung der genannten Aufgabe ist diese Einrichtung erfindungsgemäß dadurch gekennzeichnet, daß eine Druckgasleitung an die Zuführungsleitung angeschlossen ist, und daß das Druckgas durch ein Ventil in die Zuführungsleitung einleitbar ist.

Vorteilhafterweise ist das Ventil selbst als Rückspülventil ausgebildet, d.h. als eine Ventilanordnung, die während des normalen Betriebes die Zuführungsleitung in der Richtung vom Vorratsbehälter zur Abgasreinigungseinrichtung offen hält, aber beim Stillsetzen einem unter Druck stehenden Gas die umgekehrte Strömungsrichtung, d.h. zurück in den Vorratsbehälter, öffnet.

Die Spülung in Richtung des Vorratsbehälters ist der betriebsmäßigen Flußrichtung der Flüssigkeit entgegengesetzt, das Ventil dient also der "Rückspülung" ("Rückspül-Ventil").

Insbesondere kann ein thermisch isolierter Vorratsbehälter vorgesehen sein.

Auf diese Weise ist es möglich, zu jedem beliebigen Zeitpunkt die in der Flüssigkeitszuführungsleitung vorhandene Flüssigkeit mittels des unter Druck stehenden Gases in den Vorratsbehälter zurückzuspülen und/oder durch die Austrittsöffnung für die Flüssigkeit herauszuspülen. Insbesondere Nutzfahrzeuge verfügen über ein Druckluftsystem, welches an das Rückspül-Ventil angeschlossen werden kann. Auf diese Weise ist es möglich, beispielsweise unmittelbar nach dem Abstellen des Fahrzeuges, das Rückspülen der Flüssigkeit, z. B. einer wäßrigen Reduktionsmittellösung, mittels der im Fahrzeug vorhandenen Druckluft durchzuführen. Die thermische Isolation des Vorratsbehälters soll verhindern, daß die im Vorratsbehälter vorhandene Flüssigkeit und die in den Vorratsbehälter zurückgespülte Flüssigkeit bereits nach kürzeren Betriebspausen, wie sie häufig auftreten, einfrieren.

In vorteilhafter Ausgestaltung der Erfindung können in der Flüssigkeitszuführungsleitung zwischen dem Ventil und dem Vorratsbehälter angeordnete weitere Bau-Komponenten, wie z. B. ein Ventil, ein Filter, eine Pumpe, rückspülbar ausgeführt sein. Es ist auf diese Weise gewährleistet, daß in dem gesamten Flüssigkeitsstrang zwischen Vorratsbehälter und Austrittsöffnung keine Flüssigkeit nach dem Rückspülen verbleibt.

Es ist vorteilhaft, wenn als Rückspül-Ventil ein Drei/ Drei-Wegeventil eingesetzt ist. Auf diese Weise kann die in der Flüssigkeitszuführungsleitung befindliche Flüssigkeit in beiden Strömungsrichtungen gespült werden. Zusätzlich kann beispielsweise beim Einbringen der Flüssigkeit in das Strömungsmedium eine Zerstäubung der Flüssigkeit an der Austrittsöffnung mittels der Druckluft, die über das Rückspül-Ventil in die Flüssigkeitszuführungsleitung eingeführt wird, erfolgen.

Um beispielsweise einen in der Leitung für das Strömungsmedium in Strömungsrichtung des Strömungsmediums nach der Austrittsöffnung angeordneten Katalysator beim Spülen nur gering mit einer Flüssigkeitsmenge zu belasten, ist es vorteilhaft, wenn der Weg der Flüssigkeitszuführungsleitung zwischen dem Rückspül-Ventil und der Austrittsöffnung besonders kurz ist im Bezug zur Gesamtlänge der Flüssigkeitszuführungsleitung. Hierunter wird auch verstanden, daß das Rückspül-Ventil unmittelbar an der Austrittsöffnung angeordnet ist, also zwischen Austrittsöffnung und Rückspül-Ventil kein weiteres Stück der Flüssigkeitszuführungsleitung angeordnet ist.

Nach einer zweiten Ausführungsform wird die genannte Aufgabe erfindungsgemäß dadurch gelöst, daß von der Flüssigkeit, die während der Verbrennung über eine Zuführungsleitung einem Vorratsbehälter entnommen und dem Abgas der Verbrennungsanlage zur chemischen Reinigung zugeführt wird, ein Teilvolumen, das klein ist im Verhältnis zum Volumen des Vorratsbehälters, als Startvolumen beim Anlassen der Verbrennungsanlage oder kurz vor diesem Anlassen durch eine Heizung erwärmt und in das Abgas eingeleitet wird. Vorteilhafterweise ist auch die Flüssigkeitszuführungsleitung, die in einer Austrittsöffnung für die Flüssigkeit endet, beheizbar.

Eine entsprechende Einrichtung enthält erfindungsgemäß also einen Vorratsbehälter und eine daran angeschlossene Flüssigkeitszuführungsleitung, die in einer Austrittsöffnung für die Flüssigkeit endet, wobei gemäß der Erfindung der Vorratsbehälter und die Flüssigkeitszuführungsleitung durch eine Heizung beheizbar ist, die auch bei Temperaturen, die zum Erstarren der Flüssigkeit führen, ein Startvolumen der Flüssigkeit, das klein ist im Bezug zum Volumen des Vorratsbehälters, verflüssigt.

Auf diese Weise ist es möglich, Frostschäden am Vorratsbehälter und an der Flüssigkeitszuführungsleitung zu vermeiden. Bei der ersten Variante der Erfindung ist die Zuführungsleitung nach dem Stillsetzen der Verbrennungsanlage von der Flüssigkeit geleert, kann also nicht einfrieren, sondern steht für den nächsten Start zur Verfügung. Nach der zweiten Variante kann durch die Heizung (z. B. eine mit einem Thermostat geregelte elektrische Zusatzheizung) ständig die Zuführungsleitung und eine solche Flüssigkeitsmenge, die bis zum Warmlaufen der Verbrennungsanlage benötigt wird, in betriebsfertigem Zustand bereitgehalten werden. Es ist insbesondere auch möglich, beide Varianten miteinander zu kombinieren.

Vorteilhafte Weiterbildungen der Erfindung sind in den Unteransprüchen gekennzeichnet.

So kann z. B. die Einrichtung, die vorzugsweise Bestandteil einer Abgasreinigungsanlage eines Nutzfahrzeugs mit einem Verbrennungsmotor, insbesondere einem mit Luftüberschuß betriebenen Verbrennungsmotor, ist, auch nach längeren Stillstandszeiten des Nutzfahrzeugs bei Außentemperaturen unterhalb des Gefrierpunkts der Flüssigkeit wieder besonders schnell in Betrieb genommen werden, weil selbst bei ausgefrorener Flüssigkeit nur eine geringe Heizleistung zur Verflüssigung des Startvolumens benötigt wird. So ist beispielsweise in einem Lastkraftwagen nur ein Startvolumen von bis zu 2 l erforderlich. Demgegenüber weist in diesem Fall der Vorratsbehälter für die Flüssigkeit, hier eine wäßrige Harnstofflösung, ein Volumen von etwa 50 bis 100 l auf.

In vorteilhafter Ausgestaltung der Erfindung wird das Startvolumen in einem separaten Behälter bevorratet. Hierdurch ist eine weitgehende thermische Entkopplung des Startvolumens von dem restlichen, in einem Tank bereit gehaltenen Flüssigkeitsvolumen erreicht. Aufgrund dieser weitgehenden Entkopplung ist zum Auftauen des Startvolumens nur eine vergleichsweise geringe Heizleistung erforderlich, so daß zur Beheizung des Startvolumens in vorteilhafter Weise eine elektrische Heizung vorgesehen sein kann.

In vorteilhafter Weiterbildung der Erfindung können der Vorratsbehälter (oder zumindest der erwähnte Tank) und die Flüssigkeitszuführungsleitung mittels eines flüssigen Heizmediums beheizbar sein. Bei der Verwendung der Einrichtung in einem Nutzfahrzeug mit einem mit Luftüberschuß vertriebenen Verbrennungsmotor kann beispielsweise das Kühlmittel des Verbrennungsmotors zur Beheizung des Vorratsbehälters und der Flüssigkeitszuführungsleitung verwendet werden. Dies bedeutet im einzelnen, daß bei einer derart betriebenen Heizung praktisch keinerlei elektrische Zusatzenergie von der Bordbatterie des Nutzfahrzeugs bereitgestellt werden muß. Dies gilt mit Ausnahme geringer Energiemengen, beispielsweise zur Einstellung einer geeigneten Kühlmittelrate.

In besonders vorteilhafter Ausgestaltung der Erfindung sind dem Vorratsbehälter Mittel zur Temperaturüberwachung und/oder Thermostatisierung zugeordnet. Auf diese Weise ist es möglich, die im Vorratsbehälter befindliche Flüssigkeit bei; spielsweise nicht zu überhitzen oder lokal zu verdampfen. Unter Mitteln zur Temperaturüberwachung werden Temperatursensoren, wie z. B. Thermoelemente, Widerstandsthermometer und ähnliches, verstanden. Mittel zur Thermostatisierung sind beispielsweise ein mit dem Kühlmittel des Verbrennungsmotors beheizter Wärmetauscher, wobei die pro Zeiteinheit den Wärmetauscher durchströmende Kühlmittelmenge mittels eines einstellbaren Ventils gesteuert wird. Das einstellbare Ventil kann dabei beispielsweise direkt oder indirekt durch die Signale der Mittel zur Temperaturüberwachung gesteuert werden.

Um während der Stillstandszeiten eines Nutzfahrzeugs bei Temperaturen unterhalb des Gefrierpunktes der Flüssigkeit, z. B. einer wäßrigen Harnstofflösung, Frostschäden an der Einrichtung sicher zu vermeiden, kann vorgesehen sein, daß in der Flüssigkeitszuführungsleitung ein Rückspül-Ventil vorgesehen ist, das mit einem unter Druck stehenden Gas beaufschlagbar ist. Auf diese Weise werden die Flüssigkeitszuführungsleitung und andere in der Flüssigkeitszuführungsleitung angeordnete Komponenten frei von Flüssigkeit gehalten. Letztere würden ansonsten durch die beim Einfrieren auftretende Volumenvergrößerung Schäden verursachen.

Anhand von vier Figuren werden Ausführungsbeispiele der Erfindung näher erläutert.
- Figur 1: zeigt schematisch ein Beispiel nach der ersten Ausführungsform der Erfindung;
- Figur 2: zeigt ein mechanisches Mehrwege-Ventil, das als Rückspül-Ventil in der Flüssigkeitszuführungsleitung nach Figur 1 verwendet werden kann;
- Figur 3: zeigt ein Ausführungsbeispiel nach der zweiten Ausführungsform der Erfindung; und
- Figur 4: zeigt eine bevorzugte Kombination beider Ausführungsformen.

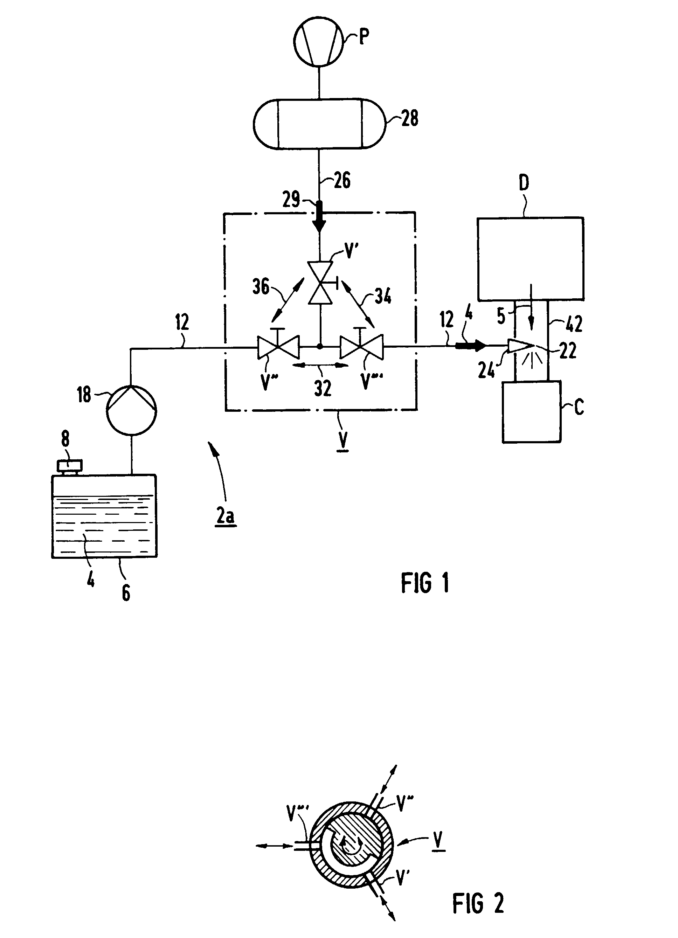

In Figur 1 ist mit D ein Dieselmotor als bevorzugtes Anwendungsbeispiel einer Verbrennungsanlage gezeigt. Dessen Abgas 5 wird in einer Einrichtung 2a über eine Abgasleitung 42 einem Katalysator C zur Verminderung des Stickoxid-Anteils durch Reduktion mittels einer Harnstofflösung 4 zugeführt. Die Harnstofflösung 4 befindet sich zunächst in einem Behälter 6 mit einer Entlüftungsvorrichtung 8. Mittels einer Förderpumpe 18 kann die Harnstofflösung 4 über eine Zuführungsleitung 12 zu einer Austrittsöffnung 22 in die Abgasleitung 42 geführt werden. Der Flüssigkeitszuführungsleitung 12 kann über eine Druckgaszuführung 26 Druckgas 29 aus einem Druckgasbehälter 28 zugeführt werden, der von einer Druckpumpe P gespeist ist. Speziell kann Druckluft als Druckgas 29 verwendet werden.

Die Zuführung des Druckgases 29 aus dem Behälter 28 erfolgt über eine Ventilanordnung V, die gemäß Figur 1 Ventile V', V" und V‴ umfaßt. Die Ventile V', V" und V‴ können gemäß Figur 2 auch einzeln verschließbare Anschlüsse sein. Über das Ventil V' ist die Druckgaszuführung 26 absperrbar, so daß entsprechend dieser (in Figur 1 als Pfeil 32 dargestellten) Funktion die wässrige Harnstofflösung 4 aus dem Behälter 6 über die Leitung 12 zur Austrittsöffnung 22 in der Abgasleitung 42 geleitet wird.

Die Förderpumpe 18 kann insbesondere als rückspülbare Pumpe ausgebildet sein, d.h. die Pumpe 18 kann nach dem Abschalten auch entgegen der Förderrichtung durchströmt werden.

Wird die Verbrennungsanlage, d.h. der Diesel-Motor D, z. B. durch Drehen des Zündschlüssels abgeschaltet, so wird das Ventil V' geöffnet und das Druckgas 29 aus dem Behälter 28 freigegeben, aber (z. B. durch Schließen des Ventils V‴) die Austrittsöffnung 22 im Weg des Abgases 5 gesperrt. In dieser Funktion, die als Pfeil 36 dargestellt ist, spült das Druckgas 29 aus dem Behälter 28 die Harnstofflösung 4 aus der Leitung 12 zurück in den Behälter 6. Anschließend kann durch Öffnung des Ventils V‴ und Schließung des Ventils V" der Druckgasbehälter 28 auch über die Austrittsöffnung 22 in die Abgasleitung 42 und damit in den Katalysator C entleert werden. In der anschließenden Ruhestellung, die wiederum der Funktion 32 entspricht, dient die Zuführungsleitung 12 als Druckausgleichsleitung, um den Behälter 6 und die Pumpe 18 zu lüften. Es kann aber auch eine eigene (nicht gezeigte) Druckausgleichsleitung vorgesehen sein. Dann kann die Zuführungsleitung 12 in der Ruhestellung gesperrt bleiben.

Für das Mehrwegeventil V sind verschiedene Ausführungen möglich. Im Prinzip genügt es, daß die Druckgasleitung 26 beim normalen Betrieb der Verbrennungsanlage D geschlossen, beim Stillsetzen der Anlage D und der Pumpen 18 und P aber geöffnet wird, so daß sich der Druckgasbehälter 28 gleichzeitig in die Abgasleitung 42 und in den Behälter 6 entleert. Insbesondere ist es möglich, die Steuerung der Ventilanordnung V und der Pumpen 18 und P über den Bordcomputer 100 des betreffenden Fahrzeugs vorzunehmen.

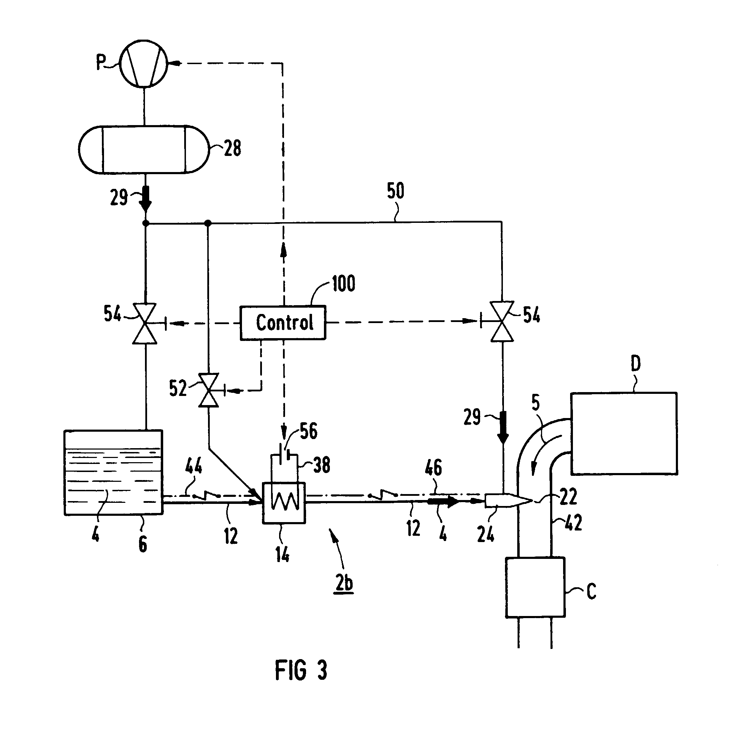

In Figur 3 ist beispielhaft eine Einrichtung 2b gezeigt, bei der die Pumpe P und der Druckbehälter 28 auch verwendet werden, um die Harnstofflösung 4 aus dem Behälter 6 über die Zuführungsleitung 12 in die Abgasleitung 42 einzudüsen. Dabei ist die Austrittsöffnung 22 als Austrittsöffnung einer Düse 24 ausgebildet. Die Druckluft 29 dient hier als Treibmittel für die Düse 24, und eine entsprechende Druckluftleitung 50 gestattet über Ventile 54 eine Steuerung durch den erwähnten Bordcomputer 100 ("control").

Für die Harnstofflösung 4 ist nicht nur der normale Tank 6, sondern auch ein in die Flüssigkeitszuführungsleitung 12 geschalteter Zwischenbehälter 14 vorgesehen, dessen Volumen nur einen Bruchteil des Volumens enthält, das der Harnstofftank 6 aufzunehmen vermag. Dieser Zwischenbehälter 14 stellt somit ein geringes Volumen zur Verfügung, das als Startvolumen 4' gerade so bemessen ist, daß die Verbrennungsanlage D eine gewisse Zeit (z. B. eine halbe Stunde), die zum Warmlaufen der gesamten Anlage D benötigt wird, betrieben werden kann. Diese Warmlauf-Dauer reicht aus, um das Volumen des Behälters 6 aufzutauen, falls die darin befindliche Flüssigkeit 4 nach einer langen Betriebspause eingefroren sein sollte.

Der Zwischenbehälter 14 weist eine Heizung 38 auf, die z. B. als elektrische Zusatzheizung ausgebildet und von einer Batterie 56 gespeist sein kann. An diese Batterie 56 ist vorteilhaft auch eine Heizleitung 44, 46 angeschlossen, die die Zuführungsleitung 12 nach einer längeren Betriebspause rasch auftauen kann. Ein steuerbares Absperrventil 52 ermöglicht die Flüssigkeitsabgabe aus dem Zwischenbehälter 14 auch in der Zeit, in der die Flüssigkeit 4 im Behälter 6 noch eingefroren sein kann.

Auch hier kann eine eigene (nicht gezeigte) Druckausgleichsleitung zwischen dem Flüssigkeitsbehälter 6 und dem Abgaskanal 42 des Motors D vorgesehen oder die Druckgasleitung so ausgebildet sein, daß sie bei stillgesetzter Pumpe P einen Druckausgleich im Behälter 6 ermöglicht.

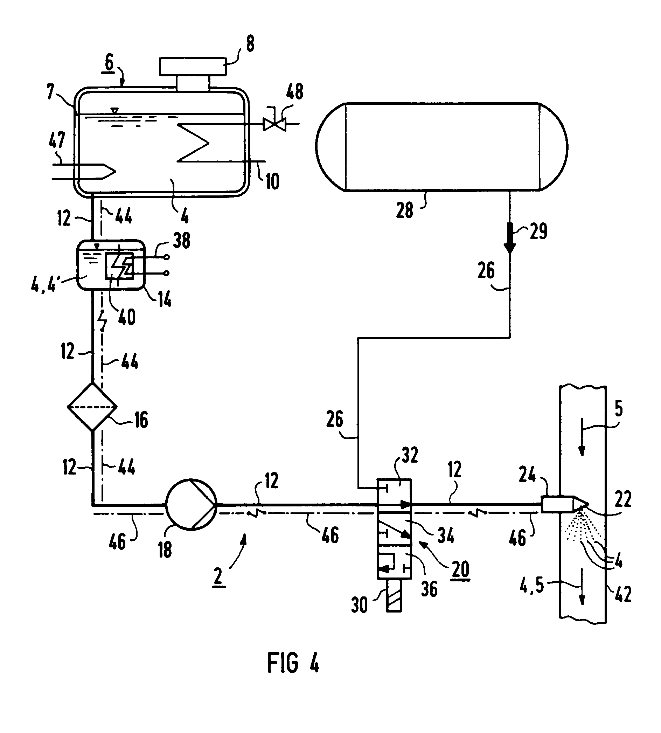

Die Figur 4 zeigt in schematischer Darstellung, wie eine Einrichtung nach der ersten Ausführungsform der Erfindung (Einrichtung 2a in Figur 1) mit einer Einrichtung (Einrichtung 2b, Figur 3) nach der zweiten Ausführungsform zu einer Einrichtung 2 kombiniert werden kann, die eine wäßrige Harnstofflösung 4 in ein in einer Abgasleitung 42 geführtes stickoxidhaltiges Abgas 5 eines nicht weiter dargestellten Verbrennungsmotors einbringt. Ein solcher Verbrennungsmotor kann beispielsweise in einem Nutzfahrzeug, wie z. B. einem LKW, einer Lokomotive oder einem Schiff, eingebaut sein.

In der Figur 4 erkennt man einen Tank 6, der Teil eines Vorratsbehälters für die Harnstofflösung 4 ist und eine thermische Isolierung 7, eine Entlüftungsvorrichtung 8 und einen Wärmetauscher 10 aufweist. An den Tank 6 ist eine Harnstoffzuführungsleitung 12 angeschlossen, die - der Reihe nach - über einen weiteren separaten Behälter 14, einen Filter 16, eine Pumpe 18 und ein Rückspül-Ventil 20 in einer mit Austrittsöffnung 22 versehenen Düse 24 endet.

Das Rückspül-Ventil 20 ist als Drei/ Drei-Wegeventil ausgeführt. Im oberen Teil des Rückspül-Ventils 20 ist eine Druckgaszuführungsleitung 26 angeschlossen, die von einem Druckluftbehälter 28 ausgeht. Das Rückspül-Ventil 20 weist weiter einen Steuereingang 30 auf, der in hier nicht weiter dargestellter Weise an einen Bordcomputer für die Steuerung des Verbrennungsmotors und der Pumpe 18 für die wäßrige Harnstofflösung 4 angeschlossen ist. Mittels dieses Steuereingangs 30 wird die momentane Funktion des als Drei/ Drei-Wegeventils ausgestalteten Rückspül-Ventils 20 festgelegt.

Das Rückspül-Ventil 20 hat drei steuerbare Funktionsweisen. Die erste Funktion 32 sieht einen ungehinderten Durchlaß der wäßrigen Harnstofflösung 4 vor. Die zweite Funktion 34 sieht ein Absperren der Harnstoffzuführungsleitung 12 in Richtung zum Vorratsbehälter 6 hin und ein Ausblasen der Harnstoffzuführungsleitung 12 in Richtung zur Austrittsöffnung 22 hin vor. Die dritte Funktion 36 sieht eine Sperrung der Harnstoffzuführungsleitung 12 in Richtung zur Austrittsöffnung 22 und ein Ausblasen der Harnstoffzuführungsleitung 12 in Richtung zum Vorratsbehälter 6 vor.

Bei der Inbetriebnahme des Verbrennungsmotors befindet sich die Harnstofflösung 4 vollständig in den Behältern 6 und 14. Bei einer Außentemperatur unter dem Gefrierpunkt der wäßrigen Harnstofflösung 4 kann es insbesondere bei längeren Standzeiten trotz der thermischen Isolierung 7 des Tanks 6 zu einem Einfrieren der wäßrigen Harnstofflösung 4 kommen. In einem solchen Betriebsfall kann nun entweder nach Anlassen des Verbrennungsmotors oder auch bereits vor dem Anlassen des Verbrennungsmotors mittels einer elektrischen Heizung 38, die einen Wärmetauscher 40 mit Wärme versorgt, ein geringes Startvolumen 4' an Harnstofflösung 4 in dem als Zwischenbehälter dienenden Behälter 14 aufgetaut werden. Diese aufgetaute Harnstofflösung 4 wird dann mittels der Pumpe 18 über das Filter 16 und das Rückspül-Ventil 20 (in Funktion 32) zur Austrittsöffnung 22 befördert. Dort wird die wäßrige Harnstofflösung 4 feinverdüst in das Abgas 5, das in der Abgasleitung 42 des Verbrennungsmotors strömt, eingebracht. Damit die Harnstofflösung 4 auf dem Weg zur Austrittsöffnung 22 nicht in der Harnstoffzuführungsleitung 12 einfriert, kann zusätzlich eine Heizung für die Harnstoffzuführungsleitung 12 vorgesehen sein, die durch die strichpunktierten Linien 44, 46 parallel zur Harnstoffzuführungsleitung 12 angedeutet ist. Hierbei kann die Wärmeenergie elektrisch oder auch über das Kühlmittel des Verbrennungsmotors herangeführt werden. So ist es möglich, daß die Harnstoffzuführungsleitung 12 wie eine Koaxialleitung aufgebaut ist, bei der in der zentralen Ader die Harnstofflösung 4 und in dem äußeren Mantel das Kühlmittel strömt. Dabei kann das Motor-Kühlmittel, soweit es durch die Koaxialleitung geführt wird, elektrisch erwärmt sein.

Mit zunehmender Betriebsdauer des Verbrennungsmotors erwärmt sich das Motor-Kühlmittel. Dieses kann beispielsweise in den Wärmetauscher 10 strömen und auf diese Weise das Auftauen der überwiegenden Harnstofflösungsmenge im Tank 6 bewirken. Der Tank 6 weist zusätzlich einen Temperatursensor 47, beispielsweise ein Thermoelement, auf, mit dessen Temperatursignal ein einstellbares Ventil 48 angesteuert werden kann, das die Durchflußmenge des Kühlmittels im Wärmetauscher 10 einstellt. Die von dem Wärmetauscher 10 auf die Harnstofflösung 4 übertragene Wärmemenge wird also mittels des einstellbaren Ventils 48 durch eine Einstellung der Kühlmittelrate reguliert. Auf diese Weise ist eine Thermostatisierung der im Tank 6 befindlichen Harnstofflösung 4 möglich. Durch diese Thermostatisierung wird als positiver Nebeneffekt eine Steigerung der Dosiergenauigkeit von üblicherweise volumetrisch arbeitenden Dosiereinrichtungen erzielt. Weiter wird ein Überhitzen der Harnstofflösung 4 sowohl im Tank 6 als auch im Zwischenbehälter 14 vermieden, was ansonsten bereits in diesen Behältern zu einer Hydrolyse der Harnstofflösung zu Ammoniak führen würde. Diese Hydrolyse ist aber unerwünscht. Während des Betriebes des Verbrennungsmotors wird der Druckluftbehälter 28 mit Druckgas 29 aufgeladen. Der hier nicht weiter beschriebene Bordcomputer 100 steuert die pro Zeiteinheit in das Abgas 5 eingebrachte Menge der Harnstofflösung 4 entsprechend der im Abgas 5 enthaltenen Stickoxidrate.

Im Anschluß an den Betrieb des Verbrennungsmotors ist es insbesondere bei Außentemperaturen unterhalb des Gefrierpunktes der wäßrigen Harnstofflösung 4 zur Vermeidung von Frostschäden vorgesehen, die Harnstofflösung 4 aus den frostgefährdeten Teilen der Einrichtung 2 zu entfernen. Diese Teile sind insbesondere das Filter 16, die Pumpe 18, das Rückspül-Ventil 20, die Düse 24 sowie die gesamte Harnstoffzuführungsleitung 12. Hierzu wird nun zunächst die Funktion 34 und dann die Funktion 36 des Rückspül-Ventils 20 ausgeübt. Es könnte ebensogut auch umgekehrt verfahren werden.

Mittels der Funktion 34 wird die noch zwischen dem Rückspül-Ventil 20 und der Düse 24 in der Harnstoffzuführungsleitung 12 befindliche Harnstofflösung 4 mittels Druckluft 29 in die Abgasleitung 42 ausgeblasen. Weil dieses Stück Harnstoffzuführungsleitung 12 im Vergleich zur Gesamtlänge der Harnstoffzuführungsleitung 12 besonders kurz ausgeführt ist, wird auch nur eine geringe Menge Harnstofflösung 4 in die nun nicht mehr vom Abgas 6 durchströmte Abgasleitung 42 eingeleitet. Die ausgetragene Harnstofflösung 4 kann beispielsweise an den heißen Wänden der Abgasleitung 42 verdampfen. Der bei der Hydrolyse (Verdampfung) entstehende Ammoniak wird in dem der Düse 24 in der Abgasleitung 42 nachgeschalteten und hier nicht weiter dargestellten Katalysator C adsorbiert.

Mittels der Funktion 36 des Rückspül-Ventils 20 wird daran anschließend die gesamte übrige Harnstoffzuführungsleitung 12 sowie die darin angeordnete Pumpe 18 und das darin angeordnete Filter 16 mit der Druckluft 29 harnstofffrei gespült. Es ist hier vorgesehen, daß die Größe des als Zwischenbehälter dienenden Vorratsbehälters 14 so gewählt ist, daß das Volumen zur Aufnahme der rückgespülten Harnstofflösung 4 inklusive eines mit Luft gefüllten Dehnungsvolumens ausreicht. Diese rückgespülte Harnstofflösung 4 wird dann bei erneuter Wiederinbetriebnahme des Verbrennungsmotors als gegebenenfalls mit nur geringer elektrische Heizleistung auftaubares Startvolumen verwendet.

In nicht weiter dargestellter Weise kann an den Vorratsbehälter 6 und gegebenenfalls auch an den Vorratsbehälter 14 eine Entlüftungs-/Druckentlastungsleitung, die in die Abgasleitung 42 in Strömungsrichtung des Abgases 5 vor dem hier nicht weiter dargestellten Katalysator zur Stickoxidminderung mündet, angeschlossen werden, wie dies beispielsweise auch aus der EP 0 577 853 A1 bekannt ist.

Die vorstehend beschriebene Einrichtung 2 gewährleistet somit jederzeit, daß unabhängig von den Außentemperatur während des Betriebes des Verbrennungsmotors immer die zur katalytischen Umsetzung der Stickoxide erforderliche Harnstoffmenge bereitgestellt werden kann. Sie gewährleistet ebenso, daß die gesamte Einrichtung 2 vor Frostschäden bei Außentemperaturen unterhalb des Gefrierpunkts der Harnstofflösung 4 geschützt ist.

Die Erfindung kann darüber hinaus auch in Anlagen der chemischen Industrie, in der Flüssigkeiten durch Freileitungen geführt werden, verwendet werden.

## Patentansprüche

1. Verfahren zum Betrieb einer Abgasreinigungseinrichtung (42, C) im Auslaß (42) einer Verbrennungsanlage (D), in deren Abgas (5) während der Verbrennung eine Flüssigkeit (4), die über eine Zuführungsleitung (12) einem Vorratsbehälter (6) entnommen wird, zur chemischen Reinigung des Abgases (5) eingeleitet wird,
**dadurch gekennzeichnet**, daß bei Stillsetzung der Verbrennungsanlage (D) zumindest ein Teilstück der Zuführungsleitung (12) mittels eines Druckgases (29) entleert wird.

2. Verfahren nach Anspruch 1,
**dadurch gekennzeichnet**, daß mittels eines Ventils (V, 20) und des Druckgases (29), das zwischen dem Vorratsbehälter (6) und dem Auslaß (42) der Verbrennungsanlage (D) in die Zuführungsleitung (12) eingeleitet wird, der zwischen der Druckgaseinleitung (26) und dem Vorratsbehälter (6) liegende Teil der Zuführungsleitung (12) in den Vorratsbehälter (6) und der zwischen der Druckgaseinleitung (26) und dem Auslaß (42) liegende Teil in den Auslaß (42) entleert wird.

3. Verfahren zum Betrieb einer Abgasreinigungseinrichtung (C) im Auslaß (42) einer Verbrennungsanlage (D), in deren Abgas (5) während der Verbrennung eine Flüssigkeit (4), die über eine Zuführungsleitung (12) einem Vorratsbehälter (6) entnommen wird, zur chemischen Reinigung des Abgases (5) eingeleitet wird,
**dadurch gekennzeichnet**, daß beim Anlassen der Verbrennungsanlage (D) oder kurz vor diesem Anlassen ein Startvolumen (4') der Flüssigkeit (4), das klein ist im Verhältnis zum Volumen des Vorratsbehälters (6) und das sich insbesondere in einem weiteren Behälter (14) befindet, durch eine Heizung (38) erwärmt und in das Abgas eingeleitet wird.

4. Verfahren nach einem der Ansprüche 1 bis 3,
**dadurch gekennzeichnet**, daß die Verbrennungsanlage (D) ein Verbrennungsmotor, insbesondere ein mit Luftüberschluß betriebener Verbrennungsmotor eines Fahrzeugs ist, und daß als Flüssigkeit (4) eine wäßrige Harnstofflösung verwendet wird.

5. Einrichtung (2a, 2) zur Durchführung des Verfahrens gemäß Anspruch 1 mit einem Vorratsbehälter (6) für die Flüssigkeit (4) und einer daran angeschlossenen Zuführungsleitung (12) zur Abgasreinigungseinrichtung (42, C),
**gekennzeichnet durch** eine Druckgaseinleitung (26), welche an die Zuführungsleitung (12) angeschlossen ist, und durch ein Ventil (V, 36), durch welches das Druckgas (29) in die Zuführungsleitung (12) einleitbar ist.

6. Einrichtung (2a, 2) nach Anspruch 5,
**dadurch gekennzeichnet**, daß das Ventil (V, 36) ein in der Zuführungsleitung (12) angeordnetes Rückspül-Ventil ist.

7. Einrichtung (2a, 2) nach Anspruch 5 oder 6,
**dadurch gekennzeichnet**, daß in der Flüssigkeits-Zuführungsleitung (12) zwischen dem Ventil (V') und dem Vorratsbehälter (6) angeordnete weitere Bau-Komponente (V", 18) rückspülbar sind.

8. Einrichtung nach einem der Ansprüche 5 bis 7,
**dadurch gekennzeichnet**, daß als Ventil (V) eine in der Zuführungsleitung (12) angeordnete Ventilanordnung vorgegeben ist, an die eine Druckgas-Zuführung (26) so angeschlossen ist, daß die Zuführungsleitung (12) in einem ersten Zustand (32) der Ventilanordnung (V) in Richtung vom Vorratsbehälter (6) zur Abgasreinigungseinrichtung (42, C) und in einem zweiten Zustand (36) von der Druckgas-Zuführung (26) in Richtung des Vorratsbehälters (6) durchströmbar ist.

9. Einrichtung nach Anspruch 8,
**dadurch gekennzeichnet**, daß die Ventilanordnung (V) einen dritten Zustand besitzt, bei dem der Vorratsbehälter (6) geschlossen ist.

10. Einrichtung nach Anspruch 8 oder 9,
**dadurch gekennzeichnet**, daß die Ventilanordnung einen Zustand (34) besitzt, bei dem die Druckgas-Zuführung (26) an die Abgasreinigungseinrichtung (42, C) angeschlossen ist.

11. Einrichtung nach einem der Ansprüche 5 bis 10,
**dadurch gekennzeichnet**, daß das Druckgas (29) in die Zuführungsleitung (12) an einer Stelle einleitbar ist, die unmittelbar an der Abgasreinigungseinrichtung (42, C) oder jedenfalls näher an der Abgasreinigungseinrichtung (42, C) als am Vorratsbehälter (6) liegt.

12. Einrichtung nach einem der Ansprüche 5 bis 11,
**dadurch gekennzeichnet**, daß die Flüssigkeitszuführungsleitung (12) beheizbar ist.

13. Einrichtung nach Anspruch 12,
**dadurch gekennzeichnet**, daß die beheizbare Flüssigkeitszuführungsleitung (12) einen Zwischenbehälter (14) für ein Volumen der Flüssigkeit (4) enthält, das klein ist gegenüber dem Volumen des Vorratsbehälters (6).

14. Einrichtung (2b, 2) zur Durchführung des Verfahrens gemäß Anspruch 3 mit einem Vorratsbehälter (6) für die Flüssigkeit (4) und einer daran angeschlossenen Zuführungsleitung (12) zur Abgasreinigungseinrichtung (42, C),
**gekennzeichnet durch** eine Heizung (38) zur Verflüssigung eines Startvolumens (4') der Flüssigkeit (4), das klein ist gegenüber dem Volumen des Vorratsbehälters (6).

15. Einrichtung nach Anspruch 14,
**gekennzeichnet durch** eine elektrische Heizung (38) für das Startvolumen (4').

16. Einrichtung nach Anspruch 14 oder 15,
**dadurch gekennzeichnet**, daß als Vorratsbehälter (6) ein Tank und ein das Startvolumen (4') aufnehmender Zwischenbehälter (14) vorgesehen ist.

17. Einrichtung nach Anspruch 16,
**dadurch gekennzeichnet**, daß zumindest der Tank (6) und die Zuführungsleitung (12) mittels eines flüssigen Heizmediums beheizbar sind.

18. Einrichtung nach einem der Ansprüche 14 bis 17,
**dadurch gekennzeichnet**, daß die Zuführungsleitung (12) elektrisch beheizbar ist.

19. Einrichtung nach einem der Ansprüche 14 bis 18,
**dadurch gekennzeichnet**, daß dem Vorratsbehälter (6) Mittel (47) zur Temperaturüberwachung und/oder Thermostatisierung (10, 48) zugeordnet sind.

20. Einrichtung nach einem der Ansprüche 14 bis 19,
**dadurch gekennzeichnet**, daß in der Flüssigkeits-Zuführungsleitung (12) eine Ventilanordnung (20) vorgesehen ist, mit dem ein unter Druck stehendes Gas (29) über die Flüssigkeits-Zuführungsleitung (12) in den Vorratsbehälter (6) einleitbar ist.

21. Verwendung der Einrichtung nach einem der Ansprüche 5 bis 20 in der Abgasreinigungsanlage eines Nutzfahrzeugs mit Verbrennungsmotor, insbesondere eines Nutzfahrzeugs mit einem mit Luftüberschluß betriebenen Verbrennungsmotor.

## Claims

1. Method for operating an exhaust-gas purification device (42, C) in the exhaust (42) of a combustion system (D) into whose exhaust gas (5) a liquid (4) which is drawn from a reservoir (6) via a supply line (12) is introduced for the purpose of chemical purification of the exhaust gas (5) during the combustion, characterized in that, during shutdown of the combustion system (D) at least a section of the supply line (12) is drained by means of a pressurized gas (29).

2. Method according to Claim 1, characterized in that, by means of a valve (V, 20) and of the pressurized gas (29) which is introduced into the supply line (12) between the reservoir (6) and the exhaust (42) of the combustion system (D), that part of the supply line (12) which is situated between the pressurized-gas inlet (26) and the reservoir (6) is drained into the reservoir (6) and that part which is situated between the pressurized-gas inlet (26) and the exhaust (42) is drained into the exhaust (42).

3. Method of operating an exhaust-gas purification device (C) in the exhaust (42) of a combustion system (D) into whose exhaust gas (5) a liquid (4) which is drawn from a reservoir (6) via a supply line (12) is introduced for the purpose of chemical purification of the exhaust gas (5) during the combustion, characterized in that, during the startup of the combustion system (D) or shortly before said startup, a starting volume (4') of the liquid (4), which is small compared with the volume of the reservoir (6) and which is contained, in particular, in a further container (14) is heated by a heater (38) and introduced into the exhaust gas.

4. Method according to any one of Claims 1 to 3, characterized in that the combustion system (D) is an internal-combustion engine, in particular an internal-combustion engine operated with excess of air, of a motor vehicle and in that an aqueous urea solution is used as liquid (4).

5. Device (2a, 2) for carrying out the method according to Claim 1, comprising a reservoir (6) for the liquid (4) and a supply line (12), connected thereto, for the exhaust-gas purification device (42, C), characterized by a pressurized-gas inlet (26) which is connected to the supply line (12), and by a valve (V, 36) through which pressurized gas (29) can be introduced into the supply line (12).

6. Device (2a, 2) according to Claim 5, characterized in that the valve (V, 36) is a back-flush valve disposed in the supply line (12).

7. Device (2a, 2) according to Claim 5 or 6, characterized in that further structural components (V", 18) disposed in the liquid supply line (12) between the valve (V') and the reservoir (6) are back-flushable.

8. Device according to any one of Claims 5 to 7, characterized in that a valve arrangement which is disposed in the supply line (12) is provided as valve (V), to which a pressurized-gas supply (26) is connected in such a way that, in a first state (32) of the valve arrangement (V) flow can take place through the supply line (12) in the direction from the reservoir (6) to the exhaust-gas purification device (42, C) and, in a second state (36), from the pressurized-gas supply (26) in the direction of the reservoir (6).

9. Device according to Claim 8, characterized in that the valve arrangement (V) has a third state in which the reservoir (6) is closed.

10. Device according to Claim 8 or 9, characterized in that the valve arrangement has a state (34) in which the pressurized-gas supply (26) is connected to the exhaust-gas purification device (42, C).

11. Device according to any one of Claims 5 to 10, characterized in that the pressurized gas (29) can be introduced into the supply line (12) at a point which is situated immediately alongside the exhaust-gas purification device (42, C) or at any rate nearer to the exhaust-gas purification device (42, C) than to the reservoir (6).

12. Device according to any one of Claims 5 to 11, characterized in that the liquid supply line (12) can be heated.

13. Device according to Claim 12, characterized in that the heatable liquid supply line (12) contains an intermediate container (14) for a volume of the liquid (4) which is small compared with the volume of the reservoir (6).

14. Device (2b, 2) for carrying out the method according to Claim 3, comprising a reservoir (6) for the liquid (4) and a supply line (12), connected thereto, running to the exhaust-gas purification device (42, C), characterized by a heater (38) for liquefying a starting volume (4') of the liquid (4) which is small compared with the volume of the reservoir (6).

15. Device according to Claim 14, characterized by an electrical heater (38) for the starting volume (4').

16. Device according to Claim 14 or 15, characterized in that a tank and an intermediate container (14) which accommodates the starting volume (4') is provided as reservoir (6).

17. Device according to Claim 16, characterized in that at least the tank (6) and the supply line (12) can be heated by means of a liquid heating medium.

18. Device according to any one of Claims 14 to 17, characterized in that the supply line (12) can be heated electrically.

19. Device according to any one of Claims 14 to 18, characterized in that means (47) for temperature monitoring and/or temperature control (10, 48) are assigned to the reservoir (6).

20. Device according to any one of Claims 14 to 19, characterized in that there is provided in the liquid supply line (12) a valve arrangement (20) with which a gas (29) which is under pressure can be introduced into the reservoir (6) via the liquid supply line (12).

21. Use of the device according to any one of Claims 5 to 20 in the exhaust-gas purification system of a utility motor vehicle having internal-combustion engine, in particular a utility vehicle having an internal-combustion engine operated with excess of air.

## Revendications

1. Procédé pour faire fonctionner un dispositif d'épuration des gaz d'échappement (42, C) dans l'échappement (42) d'une installation de combustion (D), dans laquelle les gaz d'échappement (5) sont envoyés à une épuration chimique des gaz d'échappement (5) pendant la combustion d'un liquide (4) qui, par l'intermédiaire d'une conduite d'alimentation (12), est prélevé d'un réservoir (6),
caractérisé en ce que, pendant l'arrêt de l'installation de combustion (D), au moins un tronçon partiel de la conduite d'alimentation (12) est vidé à l'aide d'un gaz sous pression (29).

2. Procédé selon la revendication 1, caractérisé en ce que, à l'aide d'une vanne (V, 20) et du gaz sous pression (29), qui est introduit dans la conduite d'alimentation (12) entre le réservoir (6) et l'échappement (42) de l'installation de combustion (D), on vide dans le réservoir (6) la partie de la conduite d'alimentation (12) située entre le point d'entrée du gaz sous pression (26) et le réservoir (6), et on vide dans l'échappement (42) la partie située entre le point d'entrée du gaz sous pression (26) et l'échappement (42).

3. Procédé pour faire fonctionner un dispositif d'épuration des gaz d'échappement (C) dans l'échappement (42) d'une installation de combustion (D), dans le gaz d'échappement (5) de laquelle on introduit, pendant la combustion, et pour assurer l'épuration chimique du gaz d'échappement (5), un liquide (4) qui, par l'intermédiaire d'une conduite d'alimentation (12) est prélevé d'un réservoir (6), caractérisé en ce que, lors du démarrage de l'installation de combustion (D), ou peu de temps avant ce démarrage, on chauffe par un élément de chauffage (38) un volume de démarrage (4') du liquide (4), volume qui est petit par rapport au volume du réservoir (6) et qui se trouve en particulier dans un autre récipient (14), et on l'introduit dans le gaz d'échappement.

4. Procédé selon l'une des revendications 1 à 3, caractérisé en ce que l'installation de combustion (D) est un moteur à combustion interne, en particulier un moteur à combustion interne d'un véhicule, utilisant un excès d'air, et que l'on utilise en tant que liquide (4) une solution aqueuse d'urée.

5. Dispositif (2a, 2) pour mettre en oeuvre le procédé selon la revendication 1, comportant un réservoir (6) pour le liquide (4) et une conduite d'alimentation (12), raccordée à ce dernier, allant vers le dispositif d'épuration des gaz d'échappement (42, C), caractérisé par une conduite d'introduction de gaz sous pression (26), qui est raccordée à la conduite d'alimentation (12), et par une vanne (V, 36), par laquelle le gaz sous pression (29) peut pénétrer dans la conduite d'alimentation (12).

6. Dispositif (2a, 2) selon la revendication 5, caractérisé en ce que la vanne (V, 36) est une vanne de passage à contre-courant disposée dans la conduite d'alimentation (12).

7. Dispositif (2a, 2) selon la revendication 5 ou 6, caractérisé en ce que d'autres composants (V", 18), disposés dans la conduite d'alimentation du liquide (12) entre la vanne (V') et le réservoir (6), peuvent être parcourus à contre-courant.

8. Dispositif selon l'une des revendications 5 à 7, caractérisé en ce qu'on prédéfinit en tant que vanne (5) un système de vanne disposé dans la conduite d'alimentation (12), système auquel une conduite d'alimentation (26) d'un gaz sous pression est raccordée de façon que la conduite d'alimentation (12), dans un premier état (32) du système de vanne (5), puisse être parcourue dans le sens allant du réservoir (6) au dispositif d'épuration des gaz d'échappement (42, C) et, dans un deuxième état (36), puisse être parcourue dans le sens allant de la conduite d'alimentation (26) du gaz sous pression au réservoir (6).

9. Dispositif selon la revendication 8, caractérisé en ce que le système de vanne (5) comporte un troisième état, dans lequel le réservoir (6) est fermé.

10. Dispositif selon la revendication 8 ou 9, caractérisé en ce que le système de vanne possède un état (34) dans lequel la conduite d'alimentation (26) du gaz sous pression est raccordée au dispositif d'épuration des gaz d'échappement (42, C).

11. Dispositif selon l'une des revendications 5 à 10, caractérisé en ce que le gaz sous pression (29) peut être injecté dans la conduite d'alimentation (12) en un point situé immédiatement contre le dispositif d'épuration des gaz d'échappement (42, C), ou en tout cas plus près du dispositif d'épuration des gaz d'échappement (42, C) que le réservoir (6).

12. Dispositif selon l'une des revendications 5 à 11, caractérisé en ce que la conduite d'alimentation du liquide (12) peut être chauffée.

13. Dispositif selon la revendication 12, caractérisé en ce que la conduite d'alimentation du liquide (12), qui peut être chauffée, comprend un récipient intermédiaire (14) pour un volume du liquide (4) qui est plus petit que le volume du réservoir (6).

14. Dispositif (2b, 2) pour mettre en oeuvre le procédé selon la revendication 3, comportant un réservoir (6) pour le liquide (4) et une conduite d'alimentation (12), qui lui est raccordée, destinée au dispositif d'épuration des gaz d'échappement (42, C), caractérisé par un chauffage (38) destiné à liquéfier un volume de démarrage (4') du liquide (4) qui est plus petit que le volume du réservoir (6).

15. Dispositif selon la revendication 14, caractérisé par un chauffage électrique (38) pour le volume de démarrage (4').

16. Dispositif selon la revendication 14 ou 15, caractérisé en ce qu'on prévoit une cuve en tant que réservoir (6), et un récipient intermédiaire (14) contenant le volume de démarrage (4').

17. Dispositif selon la revendication 16, caractérisé en ce qu'au moins la cuve (6) et la conduite d'alimentation (12) peuvent être chauffées à l'aide d'un fluide caloporteur liquide.

18. Dispositif selon l'une des revendications 14 à 17, caractérisé en ce que la conduite d'alimentation (12) peut être chauffée par un chauffage électrique.

19. Dispositif selon l'une des revendications 14 à 18, caractérisé en ce que des moyens (47) sont affectés au réservoir (6) pour surveiller et/ou réguler la température (10, 48).

20. Dispositif selon l'une des revendications 14 à 19, caractérisé en ce qu'on prévoit dans la conduite d'alimentation du liquide (12) un système de vanne (20) à l'aide duquel un gaz sous pression (29) peut être introduit dans le réservoir (6) par une conduite d'alimentation du liquide (12).

21. Utilisation du dispositif selon l'une des revendications 5 à 20 dans l'installation d'épuration des gaz d'échappement d'un véhicule utilitaire comportant un moteur à combustion interne, en particulier un véhicule utilitaire comportant un moteur à combustion interne utilisant un excès d'air.
